# FASCICULE DE BREVET EUROPEEN

(11) **EP 1 518 747 B1**
(45) Date de publication et mention de la délivrance du brevet: **02.11.2006**
(21) Numéro de dépôt: 04300567.7
(22) Date de dépôt: 02.09.2004
(51) Int. Cl.: B60N 2/30, B60N 2/26

(54) **Siège de véhicule comportant un coussin pivotant entre une position adulte et une position enfant**
Fahrzeugsitz mit einem, zwischen einer Erwachsenen- und einer Kindstellung umklappbaren Kissen
Vehicle seat with a cushion tiltable between a position for adult and a position for child

(30) Priorité: 25.09.2003 FR 0311260
(43) Date de publication de la demande: 30.03.2005
(73) Titulaire: Renault s.a.s., 92100 Boulogne Billancourt (FR)
(72) Inventeur: MITU, Aurel, 95000, CERGY (FR)

(56) Documents cités:
- EP-A- 1 273 475
- DE-A- 4 412 582
- DE-C- 4 333 108
- FR-A- 2 726 517
- US-A- 4 768 827

## Description

La présente invention concerne un siège de véhicule automobile.

La présente invention concerne plus particulièrement un siège de véhicule automobile comportant un élément de dossier et un élément d'assise, du type dans lequel l'élément d'assise comporte un coussin principal qui est sensiblement adjacent à l'élément de dossier, et un coussin mobile qui est monté pivotant, autour d'un axe sensiblement transversal et horizontal, entre une première position, dite adulte, dans laquelle une portion avant du coussin mobile, dite nez d'assise, constitue une portion d'extrémité longitudinale avant de l'élément d'assise, le nez d'assise étant sensiblement adjacent à une face avant du coussin principal, de manière que le siège soit apte à recevoir un passager adulte, et une seconde position, dite enfant, dans laquelle le nez d'assise est dégagé de la face avant du coussin principal, de manière à raccourcir la longueur de la surface d'assise de l'élément d'assise en vue de rendre le siège apte à recevoir un passager enfant.

Un tel type de siège est connu notamment du document DE-C-43.33.108 qui décrit un siège dans lequel le nez d'assise pivote pour venir se placer sur le coussin principal, en position enfant.

Dans ce document, le siège comporte deux panneaux pivotants qui forment la face avant de l'élément de dossier en position adulte et qui pivotent en se superposant au nez d'assise en position enfant.

Un tel siège présente l'inconvénient de nécessiter un élément de dossier spécifique, pour y intégrer les panneaux pivotants.

De plus, plusieurs pièces doivent être déplacées pour transformer le siège et lui permettre d'accueillir un passager enfant, ce qui induit notamment des difficultés de positionnement des éléments mobiles les uns par rapport aux autres.

Un autre inconvénient de ce siège est qu'il ne procure pas un appui dorsal optimal car, en position adulte, l'élément de dossier est constitué de plusieurs éléments mobiles les uns par rapport aux autres et, en position enfant, l'élément de dossier est moins épais qu'en position adulte.

L'invention vise à remédier à ces inconvénients en proposant une solution simple, économique, et efficace.

Dans ce but, l'invention propose un siège du type décrit précédemment, caractérisé en ce que l'axe de pivotement est agencé au voisinage de l'élément de dossier, et en ce que, en position enfant, le coussin mobile est sensiblement adjacent à la face avant de l'élément de dossier de manière à constituer un élément d'appui dorsal additionnel,

Selon d'autres divers modes de réalisation de l'invention :
- le coussin mobile comporte une portion intermédiaire qui s'étend globalement depuis le nez d'assise jusqu'à l'axe de pivotement et qui comporte une première et une seconde faces, la première face étant sensiblement adjacente à la face supérieure du coussin principal, en position adulte, et la seconde face de la portion intermédiaire étant sensiblement adjacente à la face avant de l'élément de dossier, en position enfant ;
- le coussin principal comporte, dans sa face supérieure, une cavité qui est prévue pour recevoir de manière sensiblement complémentaire la portion intermédiaire du coussin mobile, lorsque le coussin mobile occupe sa position adulte;
- en position adulte, le nez d'assise est délimité par une face supérieure globalement horizontale formant surface d'assise et une face arrière globalement transversale dite d'appui qui est sensiblement adjacente à la face avant associée du coussin principal et, en position enfant, la surface d'assise du nez d'assise est sensiblement adjacente à la face avant de l'élément de dossier et la face d'appui du nez d'assise est globalement orientée vers l'avant de manière à constituer une surface d'appui pour la tête du passager enfant;
- le nez d'assise comporte un creux qui est prévu pour recevoir de manière sensiblement complémentaire une partie de la tête du passager enfant, lorsque le coussin mobile occupe sa position enfant, en vue d'améliorer le maintien latéral de la tête ;
- l'élément de dossier comporte dans sa face avant des moyens d'accrochage qui coopèrent avec des moyens complémentaires portés par le coussin mobile, de manière à retenir le coussin mobile dans la position enfant ;
- le coussin mobile comporte des moyens pour sa fixation au coussin principal en position adulte ;
- en position adulte, le coussin mobile est fixé au coussin principal par emboîtement ;
- le coussin mobile comporte au moins un plot qui est prévu pour s'emboîter dans un réceptacle associé du coussin principal, et l'élément de dossier comporte un anneau d'accrochage qui est prévu pour coopérer avec le plot associé de manière à retenir le coussin mobile en position enfant ;
- le plot est agencé sur la face d'appui du nez d'assise et le réceptacle est agencé sur la face avant du coussin principal ;
- la mousse formant la plus grande partie du coussin mobile a une densité différente de la mousse formant la plus grande partie du coussin principal.

D'autres caractéristiques et avantages de l'invention apparaîtront à la lecture de la description détaillée qui suit pour la compréhension de laquelle on se reportera aux dessins annexés dans lesquels:
- la figure 1 est une vue en coupe longitudinale verticale qui représente schématiquement un siège réalisé conformément aux enseignements de l'invention lorsque son coussin mobile occupe sa position adulte :

- la figure 2 est une vue similaire à celle de la figure 1 qui représente le siège lorsque le coussin mobile occupe sa position enfant ;
- la figure 3 est une vue en perspective qui représente schématiquement le siège de la figure 1 lorsque le coussin mobile occupe sa position adulte ;
- la figure 4 est une vue similaire à celle de la figure 3 qui représente le siège de la figure 1 lorsque le coussin mobile occupe sa position enfant

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

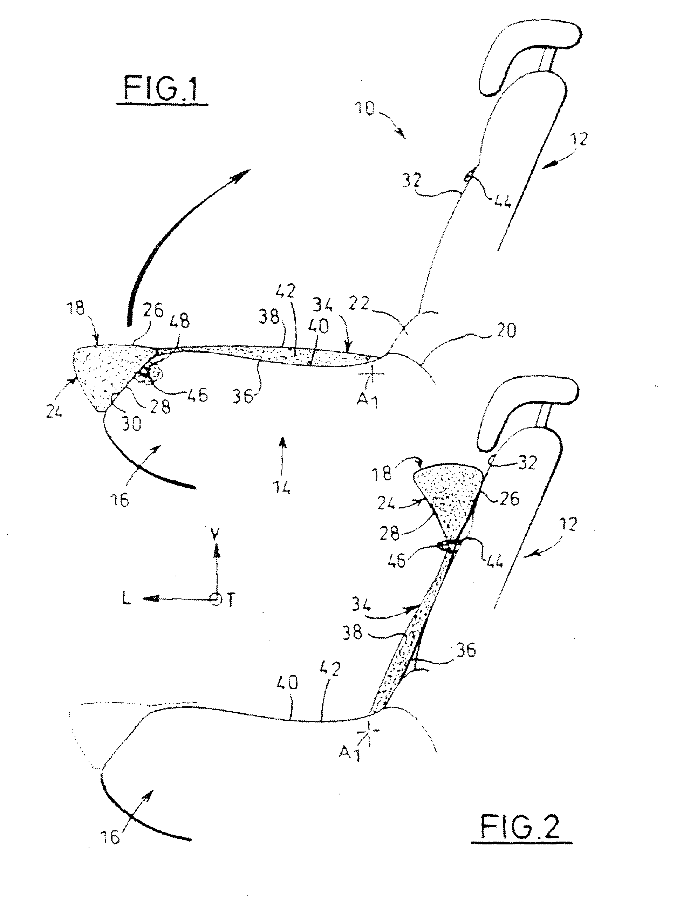

Sur les figures 1 à 4, on a représenté un siège 10 de véhicule automobile qui est réalisé conformément aux enseignements de l'invention.

Dans la suite de la description, on considérera à titre non limitatif que la direction longitudinale L est sensiblement parallèle à la direction longitudinale du véhicule, et elle est orientée de l'arrière vers l'avant, ce qui correspond à une orientation de la droite vers la gauche, en considérant les figures 1 et 2.

Le siège 10 comporte un élément de dossier 12 et un élément d'assise 14,

L'élément d'assise 14 comporte un coussin principal 16 et un coussin mobile 18.

Le coussin principal 16 a ici la forme d'un bloc globalement parallélépipédique comportant, à son extrémité longitudinale arrière, un bord transversal arrière 20 qui est sensiblement adjacent au bord transversal d'extrémité inférieure 22 de l'élément de dossier 12.

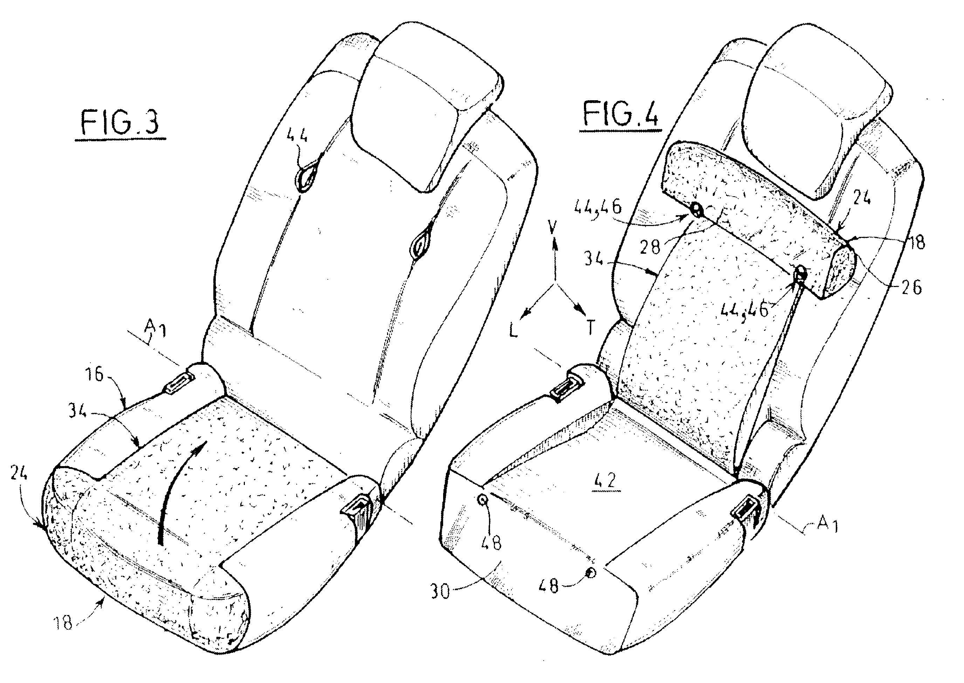

Le coussin mobile 18 est monté pivotant autour d'un axe A1 sensiblement transversal et horizontal entre une première position dite adulte, qui est représentée sur les figures 1 et 3, dans laquelle le siège 10 est apte à recevoir un passager adulte, et une seconde position dite enfant, qui est représentée sur les figures 2 et 4, dans laquelle le siège 10 est apte à recevoir un passager enfant.

En position adulte, le coussin mobile 18 comporte une portion avant dite nez d'assise 24 qui forme une portion d'extrémité longitudinale avant de l'élément d'assise 14.

En position adulte, le nez d'assise 24 comporte une face supérieure globalement horizontale formant surface d'assise 26 et une face arrière globalement transversale dite d'appui 28 qui est sensiblement adjacente à une face avant globalement transversale 30 du coussin principal 16,

En position enfant, le nez d'assise 24 est dégagé de la face avant du coussin principal, de manière à raccourcir la longueur de la surface d'assise de l'élément d'assise 14 en vue d'adapter le siège 10 à la morphologie d'un passager enfant

Conformément aux enseignements de l'invention, l'axe de pivotement A1 est agencé au voisinage de l'élément de dossier 12 et, en position enfant, le coussin mobile 18 est sensiblement adjacent à la face avant 32 de l'élément de dossier 12 de manière à former un élément d'appui dorsal additionnel.

Selon le mode de réalisation représenté ici, l'axe de pivotement A1 est agencé à proximité du bord transversal inférieur 22 de l'élément de dossier 12.

Avantageusement, le coussin mobile 18 comporte une portion intermédiaire 34 qui s'étend globalement depuis le nez d'assise 24 jusqu'à l'axe de pivotement A1.

La portion intermédiaire 34 comporte une première et une seconde faces 36, 38 sensiblement parallèles à la face supérieure 40 du coussin principal 16, lorsque le coussin mobile 18 occupe sa position adulte.

En position adulte, la première face 36 de la portion intermédiaire 34 est adjacente à la face supérieure du coussin principal 16 et, en position enfant, la seconde face 38 de la portion intermédiaire 34 est adjacente à la face avant 32 de l'élément de dossier 12,

De préférence, le coussin principal 16 comporte, dans sa face supérieure 40, une cavité 42 qui est prévue pour recevoir de manière sensiblement complémentaire la portion intermédiaire 34 du coussin mobile 18, en position adulte.

Selon une variante de réalisation (non représentée), le coussin principal 16 peut comporter, dans sa face supérieure 40, une zone en forme de rainure transversale qui est prévue pour recevoir de manière sensiblement complémentaire un bossage transversal qui est réalisé dans le coussin mobile 18 et qui peut former un appui lombaire lorsque le coussin mobile 18 occupe sa position enfant.

En position enfant, la surface d'assise 26 du nez d'assise 24 est sensiblement adjacente à la face avant 32 de l'élément de dossier 12.

Avantageusement, la face d'appui 28 du nez d'assise 24 décrit un angle aigu avec la surface d'assise 26, de manière que, en position enfant, la face d'appui 28 soit orientée globalement vers l'avant en vue de former une surface d'appui pour la tête du passager enfant. Ainsi, en position enfant, le nez d'assise 24 a une fonction d'appui-tête.

Le nez d'assise 24 peut comporter un creux (non représenté) destiné à recevoir de manière sensiblement complémentaire la partie arrière de la tête de l'enfant, ce qui permet de former un élément de maintien latéral pour la tête de façon à améliorer le confort de l'enfant, en particulier lorsqu'il dort.

De plus, le creux réalisé dans le nez d'assise 24 peut former un élément de préhension facilitant la manipulation du coussin mobile 18. Un tel élément de préhension permet de saisir le nez d'assise 24 pour faire basculer le coussin mobile 18 depuis sa position adulte vers sa position enfant.

De préférence, l'élément de dossier 12 comporte dans sa face avant 32 des moyens d'accrochage 44 qui coopèrent avec des moyens complémentaires 46 portés par le coussin mobile 18, de manière à retenir le coussin mobile 18 dans la position enfant.

De préférence, le coussin mobile 18 comporte des moyens 46 pour sa fixation au coussin principal 16 en position adulte.

Selon le mode de réalisation représenté ici, le coussin mobile 18 comporte, dans la face d'appui 28 du nez d'assise 24, deux plots 46 qui sont reçus par emboîtement élastique dans des réceptacles complémentaires 48 réalisés dans la face avant 30 du coussin principal 16, en position adulte.

La face avant 32 de l'élément de dossier 12 comporte ici des anneaux d'accrochage 44, par exemple en matériau élastique, qui coopèrent avec les plots 46 pour retenir le coussin mobile 18 en position enfant.

Bien entendu, les moyens de fixation 44, 46, 48 du coussin mobile 18 en position enfant et en position adulte peuvent revêtir d'autres formes non représentées. La fixation peut se faire, par exemple, au moyen de bandes de tissus agrippantes.

On note que le fonctionnement du siège 10 selon l'invention est très simple.

En effet, pour faire passer le siège 10 d'une configuration adaptée à un passager adulte à une configuration adaptée à un passager enfant, il suffit de faire pivoter le coussin mobile 18 autour de son axe A1 d'environ un quart de tour dans le sens horaire, en considérant les figures 1 et 2, depuis la position adulte jusqu'à la position enfant.

Pour que le siège 10 revienne dans la configuration adaptée à un passager adulte, il suffit de faire pivoter le coussin mobile 18 en sens inverse, depuis la position enfant jusqu'à la position adulte.

On note que la mousse formant le coussin mobile 18 peut être d'une densité différente de celle du coussin principal 16.

## Revendications

1. Siège (10) de véhicule automobile comportant un élément de dossier (12) et un élément d'assise (14), du type dans lequel l'élément d'assise (14) comporte un coussin principal (16) qui est sensiblement adjacent à l'élément de dossier (12), et un coussin mobile (18) qui est monté pivotant, autour d'un axe (A1) sensiblement transversal et horizontal, entre une première position, dite adulte, dans laquelle une portion avant du coussin mobile (18), dite nez d'assise (24), constitue une portion d'extrémité longitudinale avant de l'élément d'assise (14), le nez d'assise (24) étant sensiblement adjacent à une face avant (30) du coussin principal (16), de manière que le siège (10) soit apte à recevoir un passager adulte, et une seconde position, dite enfant, dans laquelle le nez d'assise (24) est dégagé de la face avant (30) du coussin principal (16), de manière à raccourcir la longueur de la surface d'assise de l'élément d'assise (14) en vue de rendre le siège apte à recevoir un passager enfant,
**caractérisé en ce que** l'axe de pivotement (A1) est agencé au voisinage de l'élément de dossier (32), et **en ce que**, en position enfant, le coussin mobile (18) est sensiblement adjacent à la face avant (32) de l'élément de dossier (12) de manière à constituer un élément d'appui dorsal additionnel.

2. Siège (10) selon la revendication précédente, **caractérisé en ce que** le coussin mobile (18) comporte une portion intermédiaire (34) qui s'étend globalement depuis le nez d'assise (24) jusqu'à l'axe de pivotement (A1) et qui comporte une première (36) et une seconde (38) faces, la première face (36) étant sensiblement adjacente à la face supérieure (40) du coussin principal (16), en position adulte, et la seconde face (38) de la portion intermédiaire (34) étant sensiblement adjacente à la face avant (32) de l'élément de dossier (12), en position enfant.

3. Siège (10) selon la revendication précédente, **caractérisé en ce que** le coussin principal (16) comporte, dans sa face supérieure (40), une cavité (42) qui est prévue pour recevoir de manière sensiblement complémentaire la portion intermédiaire (34) du coussin mobile (18), lorsque le coussin mobile (18) occupe sa position adulte.

4. Siège (10) selon l'une quelconque des revendications précédentes, **caractérisé en ce que**, en position adulte, le nez d'assise (24) est délimité par une face supérieure (26) globalement horizontale formant surface d'assise et une face arrière (28) globalement transversale dite d'appui qui est sensiblement adjacente à la face avant (30) associée du coussin principal (16) et **en ce que**, en position enfant, la surface d'assise (26) du nez d'assise (24) est sensiblement adjacente à la face avant (32) de l'élément de dossier (12) et la face d'appui (28) du nez d'assise (24) est globalement orientée vers l'avant de manière à constituer une surface d'appui pour la tête du passager enfant.

5. Siège (10) selon la revendication précédente, **caractérisé en ce que** le nez d'assise (24) comporte un creux qui est prévu pour recevoir de manière sensiblement complémentaire une partie de la tête du passager enfant, lorsque le coussin mobile (18) occupe sa position enfant, en vue d'améliorer le maintien latéral de la tête.

6. Siège (10) selon l'une quelconque des revendications précédentes, **caractérisé en ce que** l'élément de dossier (12) comporte dans sa face avant des moyens d'accrochage (44) qui coopèrent avec des moyens complémentaires (46) portés par le coussin mobile (18), de manière à retenir le coussin mobile (18) dans la position enfant.

7. Siège (10) selon l'une quelconque des revendications précédentes, **caractérisé en ce que** le coussin mobile (18) comporte des moyens (46) pour sa fixation au coussin principal (16) en position adulte.

8. Siège (10) selon la revendication précédente, **caractérisé en ce que**, en position adulte, le coussin mobile (18) est fixé au coussin principal (16) par emboîtement.

9. Siège (10) selon la revendication précédente prise en combinaison avec la revendication 6, **caractérisé en ce que** le coussin mobile (18) comporte au moins un plot (46) qui est prévu pour s'emboîter dans un réceptacle (48) associé du coussin principal (16), et **en ce que** l'élément de dossier (12) comporte un anneau d'accrochage (44) qui est prévu pour coopérer avec le plot (46) associé de manière à retenir le coussin mobile (18) en position enfant.

10. Siège (10) selon la revendication précédente prise en combinaison avec la revendication 4, **caractérisé en ce que** le plot (46) est agencé sur la face d'appui (28) du nez d'assise (24) et le réceptacle (48) est agencé sur la face avant (30) du coussin principal (16).

11. Siège (10) selon l'une quelconque des revendications précédentes, **caractérisé en ce que** la mousse formant la plus grande partie du coussin mobile (18) a une densité différente de la mousse formant la plus grande partie du coussin principal (16).

## Claims

1. Motor vehicle seat (10) including a seatback element (12) and a seat bottom element (14), of the kind in which the seat bottom element (14) includes a main cushion (16) which is predominantly adjacent to the seatback element (12), and a moveable cushion (18) which is mounted so it can pivot around an axis (A1) predominantly transverse and horizontal between a first position, referred to as adult, in which a front portion of the moveable cushion (18), referred to as the seat bottom nose (24), is made up of a front longitudinal end portion of the seat bottom element (14), with the seat bottom nose (24) being predominantly adjacent to a front face (30) of the main cushion (16), such that the seat (10) is suitable for receiving an adult passenger, and a second position, referred to as child, in which the seat bottom nose (24) is released from the front face (30) of the main cushion (16) so as to shorten the length of the seating surface of the seat bottom element (14) in order to make the seat better suited for receiving a child passenger, **characterized in that** the pivoting axis (A1) is laid out in the neighbourhood of the seatback element (12) and **in that**, in child position, the moveable cushion (18) is predominantly adjacent to the front face (32) of the seatback element (12) in order to form an additional back support element.

2. Seat (10) according to the preceding claim, **characterized in that** the moveable cushion (18) includes an intermediate portion (34) which extends overall from the seat bottom nose (24) right to the pivoting axis (A1) and which includes first (36) and second (38) faces, the first face (36) being predominantly adjacent to the upper face (40) of the main cushion (16) in adult position, and the second face (38) of the intermediate portion (34) being predominantly adjacent to the front face (32) of the seatback element (12) in child position.

3. Seat (10) according to the preceding claim, **characterized in that** the main cushion (16) includes in its upper face (40), a cavity (42) which is intended to receive in a predominantly complementary manner the intermediate portion (34) of the moveable cushion (18), when the moveable cushion (18) occupies its adult position.

4. Seat (10) according to any one of the preceding claims, **characterized in that** in adult position, the seat bottom nose (24) is delimited by an overall horizontal upper face (26) forming a seating surface and a rear face (28) overall transverse, referred to as support, which is predominantly adjacent to the front face (30) associated with the main cushion (16) and **in that**, in child position, the seating surface (26) of the seat bottom nose (24) is predominantly adjacent to the front face (32) of the seatback element (12) and the support face (28) of the seat bottom nose (24) is overall oriented forward so as to constitute a support surface of the head of the child passenger.

5. Seat (10) according to the previous claim, **characterized in that** the seat bottom nose (24) includes a hollow which is intended to receive in a predominantly complementary manner a part of the head of the child passenger, when the moveable cushion (18) is in its child position, in order to improve the lateral support of the head.

6. Seat (10) according to any one of the preceding claims, **characterized in that** the seatback element (12) includes in its front face means for hooking (44) which cooperate with complementary means (46) brought by the moveable cushion (18), in a manner to retain the moveable cushion (18) in the child position.

7. Seat (10) according to any one of the preceding claims, **characterized in that** the moveable cushion (18) includes means (46) for its attachment to the main cushion (16) in adult position.

8. Seat (10) according to the preceding claim, **characterized in that** in adult position the moveable cushion (18) is attached to the main cushion (16) by interlocking.

9. Seat (10) according to the preceding claim taken in combination with Claim 6, **characterized in that** the moveable cushion (18) includes at least one contact (46) which is intended to interlock in a receptacle (48) associated with the main cushion (16), and **in that** the seatback element (12) includes a hooking ring (44) which is intended to cooperate with the associated contact (46) so as to retain the moveable cushion (18) in child position.

10. Seat (10) according to the preceding claim taken in combination with Claim 4, **characterized in that** the contact (46) is arranged on the supporting face (28) of the seat bottom nose (24) and the receptacle (48) is laid out on the front face (30) of the main cushion (16).

11. Seat (10) according to any one of the preceding claims, **characterized in that** the foam forming the largest part of the moveable cushion (18) has a different density from the foam forming the largest part of the main cushion (16).

## Patentansprüche

1. Sitz (10) für ein Kraftfahrzeug mit einem Rückenlehnenelement (12) und einem Sitzelement (14) jener Art, bei der das Sitzelement (14) ein Hauptkissen (16), das im Wesentlichen neben dem Rückenlehnenelement (12) liegt, und ein bewegliches Kissen (18) aufweist, das um eine in Querrichtung verlaufende und horizontale Hauptachse (A1) zwischen einer ersten, so genannten Erwachsenenstellung, in der ein Vorderteil des beweglichen Kissens (18), der so genannte Sitzvorsprung (24), einen in Längsrichtung verlaufenden Vorderendteil des Sitzelements (14) bildet, wobei der Sitzvorsprung (24) im Wesentlichen neben einer Vorderseite (30) des Hauptkissens (16) liegt, so dass der Sitz (10) einen erwachsenen Insassen aufnehmen kann, und einer zweiten, so genannten Kindstellung, in der der Sitzvorsprung (24) aus der Vorderseite (30) des Hauptkissens (16) ausgerückt ist, um die Länge der Sitzfläche des Sitzelements (14) zu verkürzen, damit der Sitz so einen Kind-Insassen aufnehmen kann, schwenkbar montiert ist,
**dadurch gekennzeichnet, dass** die Schwenkachse (A1) in der Nähe des Rückenlehnenelements (12) angeordnet ist und dass sich das bewegliche Kissen (18) in Kindstellung im Wesentlichen neben der Vorderseite (32) des Rückenlehnenelements (12) erstreckt, um ein zusätzliches Rückenstützelement zu bilden.

2. Sitz (10) nach dem vorhergehenden Anspruch, **dadurch gekennzeichnet, dass** das bewegliche Kissen (18) einen Zwischenteil (34) aufweist, der sich allgemein von dem Sitzvorsprung (24) bis zur Schwenkachse (A1) erstreckt und eine erste (36) und eine zweite (38) Fläche aufweist, wobei sich die erste Fläche (36) in Erwachsenenstellung im Wesentlichen neben der Oberseite (40) des Hauptkissens (16) befindet und sich die zweite Fläche (38) des Zwischenteils (34) in Kindstellung im Wesentlichen neben der Vorderseite (32) des Rückenlehnenelements (12) befindet.

3. Sitz (10) nach dem vorhergehenden Anspruch, **dadurch gekennzeichnet, dass** das Hauptkissen (16) in seiner Oberseite (40) eine Vertiefung (42) aufweist, die zur im Wesentlichen komplementären Aufnahme des Zwischenteils (34) des beweglichen Kissens (18), wenn das bewegliche Kissen (18) seine Erwachsenenstellung einnimmt, vorgesehen ist.

4. Sitz (10) nach einem der vorhergehenden Ansprüche, **dadurch gekennzeichnet, dass** der Sitzvorsprung (24) in Erwachsenenstellung durch eine allgemein horizontale obere Seite (26), die die Sitzfläche bildet, und eine allgemein quer verlaufende hintere Seite (28), die so genannte Stützseite, die sich im Wesentlichen neben der zu dem Hauptkissen (16) gehörenden Vorderseite (30) befindet, begrenzt wird und dass sich die Sitzfläche (26) des Sitzvorsprungs (24) in Kindstellung im Wesentlichen neben der Vorderseite (32) des Rückenlehnenelements (12) befindet und die Stützseite (28) des Sitzvorsprungs (24) allgemein nach vorne ausgerichtet ist, so dass sie eine Stützfläche für den Kopf des Kind-Insassen bildet.

5. Sitz (10) nach dem vorhergehenden Anspruch, **dadurch gekennzeichnet, dass** der Sitzvorsprung (24) eine Vertiefung aufweist, die zur im Wesentlichen komplementären Aufnahme eines Teils des Kopfs des Kind-Insassen, wenn das bewegliche Kissen (18) seine Kindstellung einnimmt, vorgesehen ist, um den seitlichen Halt des Kopfes zu verbessern.

6. Sitz (10) nach einem der vorhergehenden Ansprüche, **dadurch gekennzeichnet, dass** das Rückenlehnenelement (12) in seiner Vorderseite Befestigungsmittel (44) aufweist, die mit an dem beweglichen Kissen (18) vorgesehenen komplementären Mitteln (46) zusammenwirken, um das bewegliche Kissen (18) in seiner Kindstellung festzuhalten.

7. Sitz (10) nach einem der vorhergehenden Ansprüche, **dadurch gekennzeichnet, dass** das bewegliche Kissen (18) Mittel (46) zu seiner Befestigung am Hauptkissen (16) in Erwachsenenstellung aufweist.

8. Sitz (10) nach dem vorhergehenden Anspruch, **dadurch gekennzeichnet, dass** das bewegliche Kissen (18) in Erwachsenenstellung durch Ineinandergreifen mit dem Hauptkissen (16) befestigt ist.

9. Sitz (10) nach dem vorhergehenden Anspruch in Kombination mit Anspruch 6, **dadurch gekennzeichnet, dass** das bewegliche Kissen (18) mindestens einen Nocken (46) aufweist, der zum Eingreifen in eine dem Hauptkissen (16) zugehörige Aufnahme (48) vorgesehen ist, und dass das Rückenlehnenelement (12) einen Befestigungsring (44) aufweist, der zum Zusammenwirken mit dem zugehörigen Nocken (46) vorgesehen ist, um das bewegliche Kissen (18) in Kindstellung festzuhalten.

10. Sitz (10) nach dem vorhergehenden Anspruch in Kombination mit Anspruch 4, **dadurch gekennzeichnet, dass** der Nocken (46) an der Stützseite (28) des Sitzvorsprungs (24) angeordnet ist und dass die Aufnahme (48) an der Vorderseite (30) des Hauptkissens (16) angeordnet ist.

11. Sitz (10) nach einem der vorhergehenden Ansprüche, **dadurch gekennzeichnet, dass** der den größten Teil des beweglichen Kissens (18) bildende Schaumstoff eine andere Dichte als der den größten Teil des Hauptkissens (16) bildende Schaumstoff aufweist.
